# EUROPEAN PATENT SPECIFICATION

(11) **EP 2 254 292 B1**
(45) Date of publication and mention of the grant of the patent: **20.09.2017**
(21) Application number: 08748669.2
(22) Date of filing: 23.05.2008
(51) Int. Cl.: H04L 12/46, H04L 12/707, H04L 12/911, H04L 12/813, H04L 12/851, H04L 12/927, H04W 28/08, H04L 12/66, H04W 88/16, H04L 12/24, H04W 72/00

(54) **HOME GATEWAY POLICY CONTROL METHOD AND SYSTEM**
HOME-GATEWAY-RICHTLINIENSTEUERVERFAHREN UND SYSTEM
PROCÉDÉ ET SYSTÈME DE CONTRÔLE DE POLITIQUE DE PASSERELLE DOMESTIQUE

(30) Priority: 22.01.2008 CN 200810004399
(43) Date of publication of application: 24.11.2010
(73) Proprietor: ZTE Corporation, Shenzhen, Guangdong 518057 (CN)
(72) Inventor: SUN, Mo, Shenzhen Guangdong 518057 (CN); SONG, Jun, Shenzhen Guangdong 518057 (CN)
(74) Representative: Garratt, Peter Douglas
(86) International application number: PCT/CN2008/071067
(87) International publication number: WO 2009/092208

(56) References cited:
- CN-A- 1 848 826
- CN-A- 1 848 826
- CN-A- 1 859 300
- CN-A- 1 996 968
- CN-A- 101 005 440
- CN-A- 101 106 481
- CN-A- 101 141 418
- US-A1- 2001 039 576
- US-A1- 2007 076 607
- US-A1- 2007 287 467
- EDITORS: "Output - Draft Recommendation Y.RACF (Y.2111) Release 2 (Version 0.4.0);TD 217 (WP 4/13)", ITU-T DRAFTS ; STUDY PERIOD 2005-2008, INTERNATIONAL TELECOMMUNICATION UNION, GENEVA ; CH, vol. Study Group 13 ; 4/13, 23 November 2007 (2007-11-23), pages 1-115, XP017521580, [retrieved on 2007-11-23]
- YANGJUNG KIM (HUFS) ET AL: "Additions of information components for the Rh reference point in RACF Release 2", ITU-T DRAFTS ; STUDY PERIOD 2005-2008, INTERNATIONAL TELECOMMUNICATION UNION, GENEVA ; CH, vol. Study Group 13 ; 4/13, 10 April 2007 (2007-04-10), pages 1-9, XP017559839, [retrieved on 2007-04-10]
- YANG MINGCHUAN CHINA TELECOM: "Proposed texts to Rh interface", ITU-T DRAFTS ; STUDY PERIOD 2005-2008, INTERNATIONAL TELECOMMUNICATION UNION, GENEVA ; CH, 7 January 2008 (2008-01-07), pages 1-5, XP017516006, [retrieved on 2008-01-07]
- YANGJUNG KIM ET AL: "Q.3308 output;TD 721 (GEN/11)", ITU-T DRAFTS ; STUDY PERIOD 2005-2008, INTERNATIONAL TELECOMMUNICATION UNION, GENEVA ; CH, vol. Study Group 11 ; 5/11, 21 January 2008 (2008-01-21), pages 1-10, XP017515644, [retrieved on 2008-01-21]
- DONG SUN ALCATEL-LUCENT USA: "Output - Draft Recommendation Y.RACF (Y.2111) Release 2 (Version 0.4.0)", ITU-T DRAFT ; STUDY PERIOD 2005-2008, INTERNATIONAL TELECOMMUNICATION UNION, GENEVA ; CH, vol. Study Group 11, 21 September 2007 (2007-09-21), pages 1-115, XP017515546, [retrieved on 2007-10-17]

## Description

### Field of the Invention

The present invention relates to communication field, and specifically, to a method and system for controlling home gateway policy in the NGN (Next Generation Network).

### Background Art

In the NGN, since a bearer network uses packet technology, in particular the IP technology, its problem on QoS (Quality of Service) is especially outstanding. The ITU (International Telecommunication Union) proposed to use an RACF (Resource and Admission Control Function) to solve the QoS problem of the NGN bearer network.

The principal function of the RACF is to perform resource and admission control based on an operation policy rule and according to the QoS information that a user subscribed and available resources inside a network. The RACF shields the difference of the bearer layers for the application layer and maps the QoS attributes of the application layer to the bearer layers, so that a bearer layer transmission entity can provide QoS guarantee for a media stream in a session under its guidance.

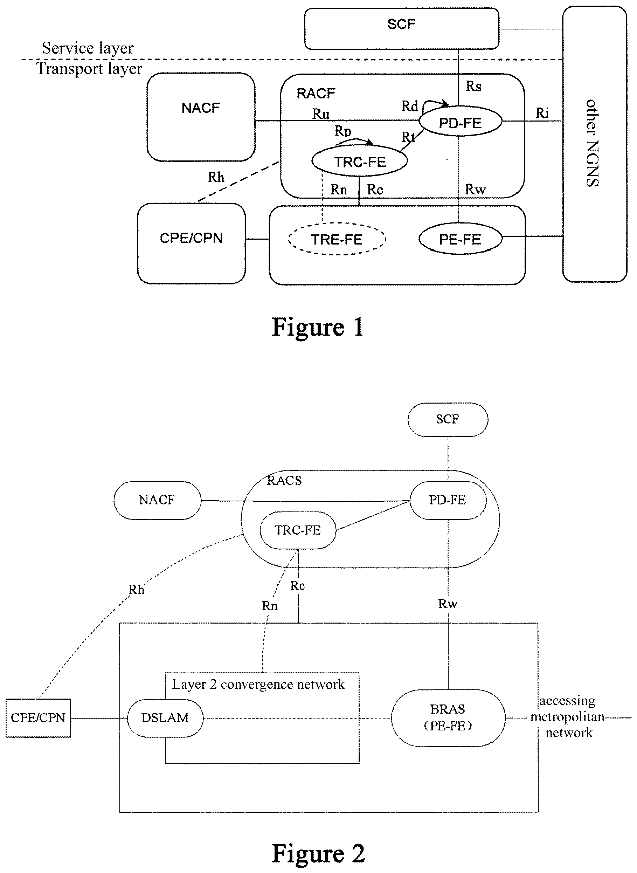

In the latest RACF draft of the ITU (see for example: DONG SUN ALCATEL-LUCENT USA "Output - Draft Recommendation YRACF (Y.2111) Release 2 (Version 0.4.0)", ITU-T DRAFT; STUDY PERIOD 2005-2008, INTERNATIONAL TELECOMMUNICATION UNION, GENEVA; CH, Vol. Study Group 11, 21 September 2007, pages 1-115, XP017515546), the functional architecture of the RACF of the ITU-T (International Telecommunication Union-Telecommunication Standardization Sector) is illustrated in Fig. 1, wherein
a PD-FE (Policy Decision Function Entity) can make a preliminary QoS resource decision based on the media stream session information acquired from an SCF (Service Control Function) via an Rs interface, and the transmission resource subscription information of a user obtained from an NACF (Network Attachment Control Function) via an Ru interface, then interact with a TRC-FE (Transport Resource Control Function Entity) to determine whether there are enough QoS resources, and at the end make a final decision and send down the final decision to a PE-FE (Policy Execute Function Entity) for execution;
the TRC-FE is mainly in charge of resource control, monitors resources in a network and collects
the related information, and provides an answer according to the specific condition of the resources when the PD-FE requests resources;
the PE-FE mainly performs policy control (gate control, bandwidth, traffic classification and marking, traffic shaping, layer 2 and layer 3 QoS mappings, collecting and reporting the use information of resources, etc.) guided by the PD-FE;
a TRE-FE (Transport Resource Execute Function Entity) protocol, the current description is that it performs a layer 2 policy execution related to a transmission technology guided by the TRC-FE, but the specific function and scope are not determined.

As the service stream of a user may pass through some different sub-network segments in the network, in order to ensure a terminal-to-terminal QoS, after making the policy decision according to the resource request of the service stream, the RACF needs to send down the policy to the policy execution functions at the boundary points of these sub-network segments, and the policy execution functions mark the QoS priority mark or label of the network segments on the corresponding traffic according to the policy to ensure its QoS in the network segments.

Fig. 2 is a schematic view for performing policy control in a DSL access network. Taking the DSL (Digital Subscriber Line) access network as an example, when a user equipment CPE/CPN is accessed by the DSL mode, the RACF generates a control policy according to a resource request, and sends down the control policy to an IP boundary point device BRAS (Bandwidth Remote Access Server), and the BRAS performs policy execution. In addition, for some large clients, an SR (Service Router) can be used.

The main content of the policy comprises a service stream template and QoS information, and the QoS information comprises gate control, uplink and downlink traffic bandwidth, QoS priority and etc.

The service stream template (such as IP quintuple, i.e., the protocol, the source address, the destination address, the source port and the destination port of a packet) is configured to match packets passing by, and if the matching is successful, the QoS control described in the policy is performed for it.

The QoS priority describes the service priority of the service stream, has different mappings at different transport layer network segments, and the value of the mapped priority will be configured in a field of a packet header for marking the service priority, such as the DSCP (DiffServ Code Point) field of the IP header, the Priority field in the VLAN (Virtual Local Area Network) label, and the CoS (Class of Service) field in the MPLS (Multi Protocol Label Switching Architecture) label, and a transport layer entity will perform forwarding according to the priority in a corresponding head to ensure the time delay of a packet stream.

The uplink bandwidth is the maximum uplink traffic bandwidth allowable for the service data traffic; the downlink bandwidth is the maximum downlink traffic bandwidth allowable for the service data traffic.

The gate control refers to whether to allow a certain service stream to pass, and when a user is initially on line, the RACF can send down some gate controls to a user according to its subscribed service, and subsequently users can dynamically apply for updating the gate controls.

When the BRAS performs policy execution, when the uplink traffic of the user passing the BRAS, the BRAS identifies it according to a packet template (such as the IP quintuple) in the policy, if it matches, a corresponding QoS priority label will be marked for the IP header of the packet according to the QoS information in the policy, and the following IP devices will ensure the QoS of the packet according to the priority label; when the downlink traffic of the user passing the BRAS, the BRAS will process the downlink traffic in a similar way according to the policy, that is, marking the QoS priority label on its layer 2 header such as a VLAN Tag according to the policy, and the layer 2 devices in the downlink direction will ensure its QoS according to the label.

In view of the current operating situations of operators, the convergence layer of a metropolitan area network, i.e., from the first local office equipment connecting the user to a service access server (BRAS/SR), has a heavy load, so it is especially necessary to provide an effective QoS guarantee for this segment of network. However, the current RACF control method can only provide effective QoS control for the downlink packets of the convergence layer, and QoS control can only be performed when the uplink packets reach the BRAS, which is imperfect. Hence, it is necessary to perform QoS control at both uplink and downlink entrances of the convergence layer.

On the other hand, in recent years, the incomes of fixed network operators from voice and pure broadband services are undergoing a continuous decrease, in view of changes in competition and demands, the fixed network operators need to turn from single service operation of pure data and voice to multi-service operations combining application, video, voice and data, so as to keep and attract more family users. In view of technologies and products, a terminal product that can support multiple services, multiple ports and can differentiate different service qualities is in need, i.e., a home gateway. The QoS control problem of the home gateway is the key point for the operators to develop digital family services.

### Summary of the Invention

The present invention aims at solving the technical problem of providing a method and system for controlling home gateway policy to solve the problem in the prior art that the convergence layer of the metropolitan area network has a heavy load and thus it is difficult to perform effective QoS control over the uplink packets.

To solve the above problem, the present invention provides a method and system as set forth in the appended claims. There is herein disclosed a method for controlling home gateway policy. An RACF sends down a policy to a home gateway, and a policy execution is performed by the home gateway for an uplink packet passing through the home gateway according to the policy received.

Further, the content of the policy at least comprises a service stream template and QoS information, and the QoS information comprises: gate control, uplink and downlink traffic bandwidth, and QoS priority;
the home gateway identifies the uplink packet passing through the home gateway according to the service stream template, and performs the following operations for identified packet stream according to the policy:
(1) executing gate control; or
(2) restricting its uplink and downlink bandwidth; or
(3) performing QoS priority process for the identified packet stream supported by its uplink according to the type of the uplink accessed by the home gateway and the QoS priority.

Further, when the type of the uplink accessed by the home gateway is a digital subscriber access multiplexer, multiple permanent virtual channels between the home gateway and the digital subscriber access multiplexer are respectively set to be corresponding to different QoS levels of the QoS priority;
the home gateway enables the uplink packet to access the permanent virtual channels of corresponding QoS levels according to the QoS priority;
the digital subscriber access multiplexer, according to the QoS levels of the permanent virtual channels, marks a corresponding priority mark on a Virtual Local Area Network, VLAN, label or on both the VLAN label and an IP header of the packets in the channels.

Further, when the type of the uplink accessed by the home gateway is an Ethernet switch, the home gateway marks, according to the content of the policy, a corresponding QoS priority mark on the VLAN label or on both the VLAN label and the IP header of the corresponding service stream of the uplink packet.

Further, the home gateway is configured with a static policy which is activated or deactivated by the RACF through a policy ID.

The present disclosure also provides a system for controlling home gateway policy , which connected to a layer 2 convergence network and a service access server, comprising a Resource and Admission Control Function, RACF, and a home gateway, and the home gateway comprises a home policy execute function entity, wherein,
the RACF is configured to send down a policy to the home policy execute function entity and the service access server;
the home policy execute function entity is configured to perform a policy execution for an uplink packet passing through the home gateway after receiving the policy.

Further, the home policy execute function entity comprises:
an identifying module, configured to identify the uplink packets passing through the home gateway according to the service stream template in the policy content, and send the same to a QoS executing module if the identification is successful;
the QoS executing module, configured to perform gate control for packet stream, restrict the uplink row bandwidth of the packet stream, and perform a QoS priority process for the packet stream supported by its uplink according to the type of the uplink accessed by the home gateway and the QoS priority.

Further, the system comprises a digital subscriber access multiplexer, and the home gateway accesses the digital subscriber access multiplexer, the digital subscriber access multiplexer accesses the service access server through a layer 2 convergence network, and multiple permanent virtual channels between the home gateway and the digital subscriber access multiplexer correspond to different QoS levels of the QoS priority respectively;
the QoS executing module enables the uplink packet to access the permanent virtual channels of corresponding QoS levels according to the QoS priority;
the digital subscriber access multiplexer marks, according to the QoS levels of the permanent virtual channels, a corresponding priority mark on the VLAN label or on both the VLAN label and the IP header of the packet in the channels.

Further, the home gateway accesses an Ethernet switch and directly accesses the service access server through a layer 2 convergence network;

The QoS executing module marks, according to the policy content, a corresponding QoS priority mark on the VLAN label or on both the VLAN label and the IP header of the corresponding service stream of the uplink packet.

Further, the home policy execute function entity comprises a static policy configuring module, configured to configure a policy statically, which is activated or deactivated by the RACF through a policy ID.

With the policy control method and system of the present invention, the policy is sent down to the home gateway by the RACF, QoS control is performed for the uplink packet passing through the home gateway before the BRAS, effective QoS assurance is provided for the uplink packet before arriving at the BRAS, and meanwhile, the problem of heavy load of a convergence layer of a metropolitan area network in the prior art is solved.

### Brief Description of the Accompanying Drawings

Figure 1 illustrates the architecture of a Resource and Admission Control Subsystem RACF of the ITU-T;
Figure 2 is a schematic view of the prior art that the RACF controls the DSL access network;
Figure 3 is a schematic view of the present invention that the RACF controls the home gateway;
Figure 4 is a schematic view of the flow of triggering the RACF to send down a policy to the home gateway when a user is on line according to the embodiments of the present invention;
Figure 5 is a schematic view of the flow that the RACF sends down a policy to the home gateway when the user requests a service according to the embodiments of the present invention;
Figure 6 is a schematic view of the networking when the home gateway accesses the DSLAM in the present invention.

### Detailed Description of the Invention

The present invention will be further detailed hereinafter in conjunction with the drawings and the embodiments, which shall not be construed as limitations on the present invention.

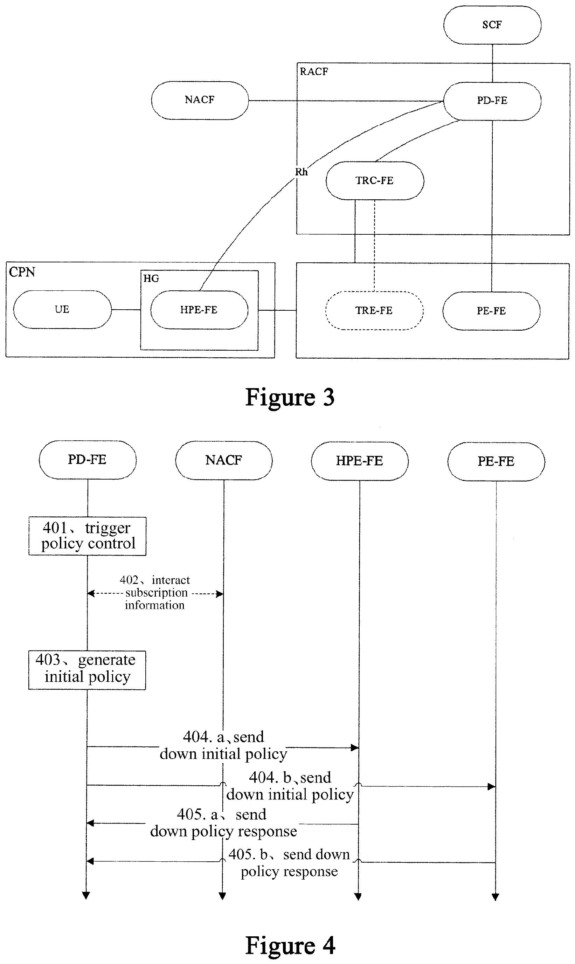

As shown in Figure 3, for the policy control system of the present invention, an HPE-FE (Home Policy Execute Function Entity) logic function entity is added at the home gateway to realize the policy execution function, and the HPE-FE receives a policy from the RACF via an interface Rh, when a user equipment, UE, requests a service through the home gateway, HG, the HPE-FE performs a policy control for the uplink packets passing through the home gateway according to the policy sent down from the RACF or the policy statically configured within the HPE-FE, so as to realize the QoS control for the uplink packets prior to the BRAS.

The PE-FE of the BRAS performs a policy execution for the downlink traffic passing through the BRAS according to the policy sent down, and may either perform the policy execution again for the uplink traffic passing through the BRAS, or not perform the policy execution but only makes a check or does nothing.

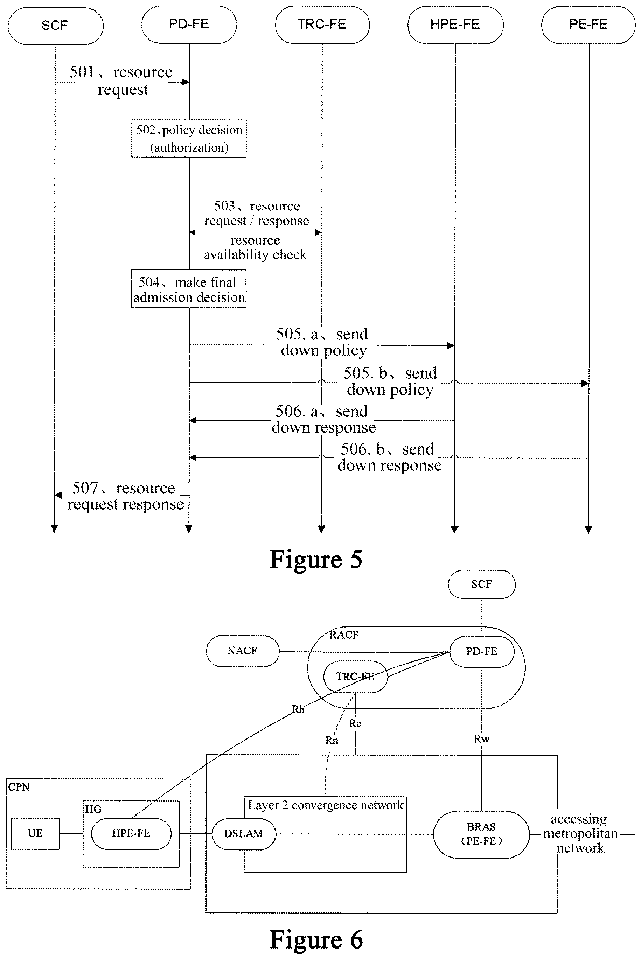

The policy control method of this embodiment comprises:
the RACF dynamically generates a policy and sends it down to the home gateway and the IP boundary point device BRAS, comprising generating and sending down the policy when the user goes on line and initiates a resource request:
   1. The processing flow of triggering the RACF to send down the policy to the home gateway when the user goes on line
      When a user is on line, identity authentication interaction will be preformed first, and when it is determined that the identity of the user is legal, it is necessary to notify the RACF to generate an initial policy for the user, then sent it down to a transport layer policy execute entity for execution (comprising the HPE-FE at the home gateway), and the specific flow is shown in Figure 4:
      (401) the PD-FE receives a notification that the user goes on line;
         The notification that the user goes on line notifying the PD-FE can be performed by the IP boundary point device such as the BRAS, and can also be performed by an NACF such as an AAA server (Authentication, Authorization, and Accounting), and when the NACF notifies the PD-FE that the user goes on line, the subscription information of the user can also be sent to the PD-FE together within the notification packet;
      (402) the PD-FE checks whether the notification packet includes the subscription information of the user, if the subscription information of the user is not included, the PD-FE will interact with the NACF to acquire the subscription information of the user;
      (403) meanwhile, the PD-FE will also check, according to the QoS related information in the subscription information of the user, the TRC-FE to see whether all the current use of the resources satisfy the user, so as to generate an initial policy;
      (404a, b) the PD-FE sends down the initial policy respectively to the HPE-FE and the PE-FE;
      (405a, b) the HPE-FE and the PE-FE respectively return a response to the policy sent down.
2. The processing flow that the RACF sends down the policy to the home gateway when the user requests the service
   When the user hopes to dynamically initiates a service with QoS guarantee, it will determine the QoS of the service through the negotiation of a service layer. A service control layer initiates a resource request to the RACF according to the negotiated QoS, and the RACF generates a QoS policy of the transport layer which is then sent down to the transport layer policy execute entity (including the HPE-FE in the home gateway) for execution, and the specific flow is shown in Figure 5:
   (501) an SCF initiates the resource request to the PD-FE according to the QoS negotiated by the service layer;
   (502) the PD-FE authorizes the request, and makes a preliminary policy decision, if the PD-FE does not have the subscription information of the user, it will acquire it by interacting with the NACF;
   (503) the PD-FE requests resources from the TRC-FE, the TRC-FE judges the request according to the situation of current resources, and returns whether there are enough resources;
   (504) the PD-FE makes a final admission policy decision according to resource availability;
   (505a, b) the PD-FE sends down the policy respectively to the HPE-FE and the PE-FE;
   (506a, b) the HPE-FE and the PE-FE respectively return a response to the policy sent down;
   (507) the PD-FE returns a resource request response to the SCF.

In the above steps what is sent down to the home gateway by the RACF is a dynamically generated policy, but the HPE-FE itself can also statically configure some policies to which enabling operation can be performed by the RACF through a policy ID, such as activating and deactivating operations.

After the RACF has sent down the policy to the HPE-FE at the home gateway, the HPE-FE performs policy control for the uplink packets passing through the home gateway, for example, the operations such as matching the uplink packets passing by, identifying the packet stream matching a packet template in the policy, performing gate control (gate opening or gate closing, i.e., whether to allow the packet stream to pass) according to the content of the policy, restricting the uplink and downlink bandwidth of the packet stream, and marking a priority label supported by the uplink on the identified packet stream according to the type of the uplink accessed by the home gateway and the QoS priority.

The flow that the HPE-FE performs the policy control will be described hereinafter through the two most common access network methods.

### a) Home gateway accessing DSLAM

In this situation, the uplink interface of the home gateway is an ATM (Asynchronous Transfer

Mode) interface, and it accesses the DSLAM (Digital Subscriber Line Access Multiplexer) via the ATM, the DSLAM then accesses the BRAS through a layer 2 Ethernet convergence network (consisting of some switches), and the networking is shown in Figure 6.

In this networking mode, the home gateway will establish several PVCs (Permanent Virtual Channel) corresponding to different QoS levels (such as constant bit rate, variable bit rate, and uncertain bit rate) with DSLAM.

The home gateway filters the uplink packets passing by according to the policy sent down, identifies a service stream matching the packet template in the policy, and the home gateway enables the packets to access the PVC channels of corresponding QoS levels according to the QoS description in the policy. The DSLAM marks corresponding priority levels on the VLAN label of the packets in the channels according to the QoS levels of the PVC channels. The subsequent layer 2 devices will forward the packets according to the priority levels to guarantee the QoS.

For the BRAS, since it comprises the function of the PE-FE, for the uplink packets, the BRAS can mark corresponding priority levels on the IP header of the packets according to the policy; or, the priority levels in the IP header can also be marked by the home gateway, the BRAS only checks it or does nothing.

### b) Home gateway accessing the Ethernet switch

In this situation, it is equivalent to that the home gateway directly accesses the layer 2 Ethernet convergence network and accesses the BRAS through convergence.

In this networking mode, the home gateway directly marks corresponding priority levels on the VLAN labels of the corresponding uplink packet stream according to the policy, the Ethernet switch in the layer 2 Ethernet convergence network forwards the packets according to the priority levels to guarantees the QoS.

For the BRAS, since it comprises the function of the PE-FE, for the uplink packets, the BRAS can mark corresponding priority levels on the IP header of the packets according to the policy, or the priority levels in the IP header can also be marked by the home gateway, the BRAS only checks it or does nothing.

To realize the above method for controlling home gateway policy, the system for controlling home gateway policy corresponding thereto is connected to the layer 2 convergence network and the service access server, comprising an RACF and a home gateway, characterized in that the home gateway comprises a home policy execute function entity, wherein,
the RACF is configured to send down a policy to the home policy execute function entity and the service access server;
the home policy execute function entity is configured to perform policy execution for an uplink packet passing through the home gateway after receiving the policy, comprises:
an identifying module, configured to identify the uplink packet passing through the home gateway according to the service stream template in the policy content, and send the same to a QoS executing module if the identification is successful;
a static policy configuring module, configured to configure a policy statically, which is activated or deactivated by the RACF through a policy ID; and
the QoS executing module, configured to perform gate control for the packet stream, restrict the uplink row bandwidth of the packet stream, and perform a QoS priority process for the packet stream that is supported by its uplink according to the type of the uplink accessed by the home gateway and the QoS priority.

As discussed above, the home gateway can access the service access server through the digital subscriber access multiplexer or the Ethernet switch.

Of course, the present invention can have many other embodiments, and those skilled in the art may make various corresponding changes and variations to the present invention without departing from the scope of protection of the annexed claims of the present invention.

### Industrial Applicability

With the policy control method and system of the present invention, the policy is sent down to the home gateway through the RACF, QoS control is made for the uplink packets passing through the home gateway before the BRAS, effective QoS assurance is provided for the uplink packets before arriving at the BRAS, and meanwhile, the problem of heavy load of a convergence layer of a metropolitan area network in the prior art is solved.

## Claims

1. A method for controlling home gateway policy, in which a Resource and Admission Control Function, RACF, sends (405, 505) down a policy to a home gateway, and the home gateway performs a policy execution for an uplink packet passing through the home gateway according to the policy received, **characterized in that** the content of the policy at least comprises a service stream template and QoS information, and the QoS information comprises: uplink and downlink traffic bandwidth, and QoS priority;
the home gateway identifies the uplink packet passing through the home gateway according to the service stream template, and performs the following operations on identified packet stream according to the policy:
restricting its uplink bandwidth; or
performing a QoS priority process for the identified packet stream supported by its uplink according to the type of the uplink accessed by the home gateway and the QoS priority.

2. The method according to claim 1, **characterized in that** the QoS information further comprises: gate control;
the home gateway further performs gate control on the identified packet stream according to the policy.

3. The method according to claim 2, **characterized in that**
when the type of the uplink accessed by the home gateway is a digital subscriber access multiplexer, multiple permanent virtual channels between the home gateway and the digital subscriber access multiplexer are respectively set to be corresponding to different QoS levels of the QoS priority;
the home gateway enables the uplink packet to access the permanent virtual channels of corresponding QoS levels according to the QoS priority;
the digital subscriber access multiplexer, according to the QoS levels of the permanent virtual channels, marks a corresponding priority mark on a Virtual Local Area Network, VLAN, label or on both the VLAN label and an IP header of the packet in the channels.

4. The method according to claim 1 or 2, **characterized in that** when the type of the uplink accessed by the home gateway is an Ethernet switch, the home gateway marks, according to the content of the policy, a corresponding QoS priority mark on the VLAN label or on both the VLAN label and the IP header of the corresponding service stream of the uplink packet.

5. The method according to claim 1, **characterized in that** the home gateway is configured with a static policy which is activated or deactivated by the RACF through a policy ID.

6. A system for controlling home gateway policy, which connected to a layer 2 convergence network and a service access server, comprising a Resource and Admission Control Function, RACF, and a home gateway, in which the home gateway comprises a home policy execute function entity, wherein
the RACF (RACF) is configured to send down a policy to the home policy execute function entity (HPE-FE) and the service access server (BRAS);
the home policy execute function entity is configured to perform a policy execution for an uplink packet passing through the home gateway after receiving the policy;
**characterized in that** the home policy execute function entity comprises:
an identifying module, configured to identify the uplink packets passing through the home gateway according to the service stream template in the policy content, and send the same to a QoS executing module if the identification is successful;
the QoS executing module, configured to perform restrict the uplink row bandwidth of the packet stream, or perform a QoS priority process for the packet stream supported by its uplink according to the type of the uplink accessed by the home gateway and the QoS priority.

7. The system according to claim 6, **characterized in that** the QoS executing module, further configured to perform gate control for packet stream.

8. The system according to claim 7, **characterized in that**
the system comprises a digital subscriber access multiplexer, and the home gateway accesses the digital subscriber access multiplexer, the digital subscriber access multiplexer accesses the service access server through a layer 2 convergence network, and multiple permanent virtual channels between the home gateway and the digital subscriber access multiplexer correspond to different QoS levels of the QoS priority respectively;
the QoS executing module enables the uplink packet to access the permanent virtual channels of corresponding QoS levels according to the QoS priority;
the digital subscriber access multiplexer marks, according to the QoS levels of the permanent virtual channels, a corresponding priority mark on the VLAN label or on both the VLAN label and the IP header of the packet in the channels.

9. The system according to claim 7, **characterized in that**
the home gateway accesses an Ethernet switch and directly accesses the service access server through a layer 2 convergence network;
the QoS executing module marks, according to the policy content, a corresponding QoS priority mark on the VLAN label or on both the VLAN label and the IP header of the corresponding service stream of the uplink packet.

10. The system according to claim 6, **characterized in that** the home policy execute function entity comprises a static policy configuring module, configured to configure a policy statically, which is activated or deactivated by the RACF through a policy ID.

## Patentansprüche

1. Verfahren zur Steuerung einer Home-Gateway-Richtlinie, bei dem eine Ressourcen- und Zulassungssteuerfunktion (Resource and Admission Control Funktion, RACF) (405, 505) eine Richtlinie zu einem Home-Gateway sendet und das Home-Gateway eine Richtlinienausführung für ein Uplink-Paket, das durch das Home-Gateway geleitet wird, gemäß der empfangenen Richtlinie durchführt, **dadurch gekennzeichnet, dass** der Inhalt der Richtlinie mindestens eine Dienststromvorlage und eine QoS-Informationen umfasst und die QoS-Informationen Folgendes umfassen: die Uplink- und Downlink-Datenverkehrsbandbreite und die QoS-Priorität;
das Home-Gateway das Uplink-Paket, das durch das Home-Gateway geleitet wird, gemäß der Dienststromvorlage identifiziert, und folgende Operationen auf dem identifizierten Paketstrom gemäß der Richtlinie ausführt:
Beschränken der Uplink-Bandbreite; oder
Durchführen eines QoS-Prioritätsprozesses für den identifizierten Paketstrom, der durch seinen Uplink unterstützt wird, gemäß dem Typ des Uplinks, auf den das Home-Gateway und die QoS-Priorität zugreifen.

2. Verfahren nach Anspruch 1, **dadurch gekennzeichnet, dass** die QoS-Informationen ferner Folgendes umfassen: Gate-Steuerung;
wobei das Home-Gateway ferner die Gate-Steuerung auf dem identifizierten Paketstrom gemäß der Richtlinie durchführt.

3. Verfahren nach Anspruch 2, **dadurch gekennzeichnet, dass**
wenn der Typ des Uplinks, auf den das Home-Gateway zugreift, ein digitaler Teilnehmerzugriffsmultiplexer ist, mehrere permanente virtuelle Kanäle zwischen dem Home-Gateway und dem digitalen Teilnehmerzugriffsmultiplexer jeweils so eingestellt werden, dass sie unterschiedlichen QoS-Niveaus der QoS-Priorität entsprechen;
das Home-Gateway es dem Uplink-Paket ermöglicht, auf die permanenten virtuellen Kanäle der entsprechenden QoS-Niveaus gemäß der QoS-Priorität zuzugreifen;
der digitale Teilnehmerzugriffsmultiplexer gemäß den QoS-Niveaus der permanenten virtuellen Kanäle eine entsprechende Prioritätsmarkierung auf einem Etikett eines virtuellen lokalen Netzwerks, VLAN, oder sowohl auf dem VLAN-Etikett als auch auf einem IP-Kopfdatensatz des Pakets in den Kanälen markiert.

4. Verfahren nach Anspruch 1 oder 2, **dadurch gekennzeichnet, dass**, wenn der Typ des Uplinks, auf den das Home-Gateway zugreift, ein Ethernet-Switch ist, das Home-Gateway gemäß dem Inhalt der Richtlinie eine entsprechende QoS-Prioritätsmarke auf dem VLAN-Etikett oder sowohl auf dem VLAN-Etikett als auch auf dem IP-Kopfdatensatz des entsprechenden Dienststroms des Uplink-Pakets markiert.

5. Verfahren nach Anspruch 1, **dadurch gekennzeichnet, dass** das Home-Gateway mit einer statischen Richtlinie konfiguriert ist, die durch die RACF über eine Richtlinien-ID aktiviert oder deaktiviert wird.

6. System zur Steuerung einer Home-Gateway-Richtlinie, das mit einem Schicht-2-Konvergenznetzwerk und einem Dienstzugriffsserver, der eine Ressourcen- und Zulassungssteuerungsfunktion, RACF, umfasst und einem Home-Gateway verbunden ist, wobei das Home-Gateway eine Home-Richtlinienausführungsfunktionsentität umfasst, wobei die RACF (RACF) so konfiguriert ist, dass sie eine Richtlinie an die Home-Richtlinienausführungsfunktionsentität (Home Policy Execute-Function Entity, HPE-FE) und den Dienstzugriff (BRAS) sendet;
wobei die Home-Richtlinienausführungsfunktionsentität dafür konfiguriert ist, eine Richtlinienausführung für ein Uplink-Paket durchzuführen, das durch das Home-Gateway geleitet wird, nachdem die Richtlinie empfangen wurde;
**dadurch gekennzeichnet, dass** die Home-Richtlinienausführungsfunktionsentität Folgendes umfasst:
ein Identifizierungsmodul, das so konfiguriert ist, dass es die Uplink-Pakete identifiziert, die gemäß der Dienststromvorlage in dem Richtlinieninhalt durch das Home-Gateway geleitet werden, und dieselbe an ein QoS-Ausführungsmodul sendet, wenn die Identifikation erfolgreich ist;
wobei das QoS-Ausführungsmodul dafür konfiguriert ist, die Uplink-Zeilenbandbreite des Paketstroms zu beschränken, oder einen QoS-Prioritätsprozess für den Paketstrom, der durch seinen Uplink unterstützt wird, gemäß dem Typ des Uplinks durchzuführen, auf den das Home-Gateway und die QoS-Priorität zugreifen.

7. System nach Anspruch 6, **dadurch gekennzeichnet, dass** das QoS-Ausführungsmodul ferner so konfiguriert ist, dass es eine Gate-Steuerung für einen Paketstrom durchführt.

8. System nach Anspruch 7, **dadurch gekennzeichnet, dass**
das System einen digitalen Teilnehmerzugriffsmultiplexer umfasst und das Home-Gateway auf den digitalen Teilnehmerzugriffsmultiplexer zugreift, wobei der digitale Teilnehmerzugriffsmultiplexer über ein Schicht-2-Konvergenznetzwerk auf den Dienstzugriffsserver zugreift und mehrere permanente virtuelle Kanäle zwischen dem Home-Gateway und dem digitalen Teilnehmerzugriffsmultiplexer unterschiedlichen QoS-Niveaus der QoS-Priorität entsprechen;
das QoS-Ausführungsmodul es dem Uplink-Paket ermöglicht, auf die permanenten virtuellen Kanäle der entsprechenden QoS-Niveaus gemäß der QoS-Priorität zuzugreifen;
der digitale Teilnehmerzugriffsmultiplexer gemäß den QoS-Niveaus der permanenten virtuellen Kanäle eine entsprechende Prioritätsmarke auf dem VLAN-Etikett oder sowohl auf dem VLAN-Etikett als auch auf dem IP-Kopfdatensatz des Pakets in den Kanälen markiert.

9. System nach Anspruch 7, **dadurch gekennzeichnet, dass**
das Home-Gateway auf einen Ethernet-Switch zugreift und über ein Schicht-2-Konvergenznetzwerk direkt auf den Dienstzugriffsserver zugreift;
das QoS-Ausführungsmodul gemäß dem Richtlinieninhalt eine entsprechende QoS-Prioritätsmarke auf dem VLAN-Etikett oder sowohl auf dem VLAN-Etikett als auch auf dem IP-Kopfdatensatz des entsprechenden Dienststroms des Uplink-Pakets markiert.

10. System nach Anspruch 6, **dadurch gekennzeichnet, dass** die Home-Richtlinienausführungsfunktionsentität ein statisches Richtlinienkonfigurationsmodul umfasst, das dafür konfiguriert ist, eine Richtlinie statisch zu konfigurieren, die durch die RACF über eine Richtlinien-ID aktiviert oder deaktiviert wird.

## Revendications

1. Procédé servant à contrôler une politique se rapportant à une passerelle domestique, procédé dans lequel une RACF (resource and admission control function - fonction de contrôle des ressources et des admissions) envoie (405, 505) vers l'aval une politique à une passerelle domestique, et la passerelle domestique effectue une exécution de la politique pour un paquet à liaison montante passant par la passerelle domestique en fonction de la politique reçue, **caractérisé en ce que** le contenu de la politique comporte au moins un modèle de flux de services et des informations de QoS (quality of service - qualité de service) et les informations de QoS comportent la bande passante du traffic à liaison montante et à liaison descendante, et la priorité de QoS ;
la passerelle domestique identifie le paquet à liaison montante passant par la passerelle domestique en fonction du modèle de flux de services, et effectue les opérations suivantes sur le flux de paquets identifié en fonction de la politique :
restreindre sa bande passante à liaison montante ; ou
effectuer un processus de priorité de QoS pour le flux de paquets identifié pris en charge par sa liaison montante en fonction du type de la liaison montante accédée par la passerelle domestique et de la priorité de QoS.

2. Procédé selon la revendication 1, **caractérisé en ce que** les informations de QoS comportent par ailleurs :
un contrôle de passerelle ;
la passerelle domestique effectue par ailleurs un contrôle de passerelle sur le flux de paquets identifié en fonction de la politique.

3. Procédé selon la revendication 2, **caractérisé en ce que**
quand le type de la liaison montante accédée par la passerelle domestique est un multiplexeur d'accès d'abonné numérique, de multiples canaux virtuels permanents entre la passerelle domestique et le multiplexeur d'accès d'abonné numérique sont réglés respectivement pour correspondre à différents niveaux de QoS de la priorité de QoS ;
la passerelle domestique permet au paquet à liaison montante d'accéder aux canaux virtuels permanents de niveaux de QoS correspondants en fonction de la priorité de QoS ;
le multiplexeur d'accès d'abonné numérique, en fonction des niveaux de QoS des canaux virtuels permanents, marque une marque de priorité correspondante sur une étiquette VLAN (virtual local area network - réseau local virtuel) ou sur à la fois l'étiquette VLAN et un en-tête IP du paquet dans les canaux.

4. Procédé selon la revendication 1 ou la revendication 2, **caractérisé en ce que**, quand le type de la liaison montante accédée par la passerelle domestique est un commutateur Ethernet, la passerelle domestique marque, en fonction du contenu de la politique, une marque de priorité de QoS correspondante sur l'étiquette VLAN ou sur à la fois l'étiquette VLAN et l'en-tête IP du flux de services correspondant du paquet à liaison montante.

5. Procédé selon la revendication 1, **caractérisé en ce que** la passerelle domestique est configurée avec une politique statique qui est activée ou désactivée par la RACF par l'intermédiaire d'une ID de politique.

6. Système servant à contrôler la politique de passerelle domestique, qui est raccordé à un réseau de convergence de couche 2 et à un serveur d'accès aux services, comportant une RACF (resource and admission control function
- fonction de contrôle des ressources et des admissions), et une passerelle domestique, dans lequel la passerelle domestique comporte une entité de fonction d'exécution de politique domestique, dans lequel la RACF (RACF) est configurée pour envoyer vers l'aval une politique à la HPE-FE (home policy execute function entity - entité de fonction d'exécution de politique domestique) et au serveur d'accès aux services (BRAS) ;
l'entité de fonction d'exécution de politique domestique est configurée pour effectuer une exécution de politique pour un paquet à liaison montante passant par la passerelle domestique après la réception de la politique ;
**caractérisé en ce que** l'entité de fonction d'exécution de politique domestique comporte :
un module d'identification, configuré pour identifier les paquets à liaison montante passant par la passerelle domestique en fonction du modèle de flux de services dans le contenu de la politique, et pour envoyer ceux-ci à un module d'exécution de QoS si l'identification est un succès ;
le module d'exécution de QoS, configuré pour effectuer une restriction au niveau de la bande passante de la rangée à liaison montante du flux de paquets, ou pour effectuer un processus de priorité de QoS pour le flux de paquets pris en charge par sa liaison montante en fonction du type de la liaison montante accédée par la passerelle domestique et de la priorité de QoS.

7. Système selon la revendication 6, **caractérisé en ce que** le module d'exécution de QoS est par ailleurs configuré pour effectuer un contrôle de passerelle pour le flux de paquets.

8. Système selon la revendication 7, **caractérisé en ce que**
le système comporte un multiplexeur d'accès d'abonné numérique, et la passerelle domestique accède au multiplexeur d'accès d'abonné numérique, le multiplexeur d'accès d'abonné numérique accède au serveur d'accès aux services par un réseau de convergence de couche 2, et de multiples canaux virtuels permanents entre la passerelle domestique et le multiplexeur d'accès d'abonné numérique correspondent aux différents niveaux de QoS de la priorité de QoS respectivement ;
le module d'exécution de QoS permet au paquet à liaison montante d'accéder aux canaux virtuels permanents de niveaux de QoS correspondants en fonction de la priorité de QoS ;
le multiplexeur d'accès d'abonné numérique marque, en fonction des niveaux de QoS des canaux virtuels permanents, une marque de priorité correspondante sur l'étiquette VLAN ou sur à la fois l'étiquette VLAN et l'en-tête IP du paquet dans les canaux.

9. Système selon la revendication 7, **caractérisé en ce que**
la passerelle domestique accède à un commutateur Ethernet et accède directement au serveur d'accès aux services par un réseau de convergence de couche 2 ;
le module d'exécution de QoS marque, en fonction du contenu de la politique, une marque de priorité de QoS correspondante sur l'étiquette VLAN ou sur à la fois l'étiquette VLAN et l'en-tête IP du flux de services correspondant du paquet à liaison montante.

10. Système selon la revendication 6, **caractérisé en ce que** l'entité de fonction d'exécution de politique domestique comporte un module de configuration de politique statique, configuré pour configurer une politique de manière statique, qui est activée ou désactivée par la RACF par l'intermédiaire d'une ID de politique.
